# FASCICULE DE BREVET EUROPEEN

(11) **EP 1 162 379 B1**
(45) Date de publication et mention de la délivrance du brevet: **18.07.2007**
(21) Numéro de dépôt: 01401407.0
(22) Date de dépôt: 30.05.2001
(51) Int. Cl.: F16C 13/00, F16C 35/067, F16H 55/46, F16H 55/48, F16H 7/12

(54) **Galet tendeur de courroie**
Spannrolle für einen Riementrieb
Belt tensioning pulley

(30) Priorité: 06.06.2000 FR 0007228
(43) Date de publication de la demande: 12.12.2001
(73) Titulaire: SKF FRANCE, F-92140 Clamart (FR)
(72) Inventeur: Tadic, Vedran, 37000 Tours (FR); Stolz, Robert, 97422 Schweinfurt (DE)
(74) Mandataire: Casalonga, Axel

(56) Documents cités:
- DE-C1- 4 499 780
- US-A- 1 627 558
- US-A- 4 640 632
- US-A- 4 848 938
- US-A- 5 414 784
- US-A- 5 468 070

## Description

La présente invention concerne les galets tendeurs de courroie et les poulies utilisées dans ces galets tendeurs.

Les galets tendeurs sont utilisés dans de nombreuses applications, en mécanique en particulier. C'est ainsi qu'on trouve de tels galets tendeurs dans les véhicules automobiles pour maintenir en pemanence une tension prédéterminée des courroies utilisées pour entraîner des accessoires divers, tels que pompe à eau, alternateur, etc.

De tels galets tendeurs comportent généralement un support fixe et une poulie tournante montée folle sur le support fixe, ladite poulie présentant une surface périphérique destinée à entrer en contact avec une courroie. Le support de la poulie est généralement réglable de façon que sa position puisse être modifiée par rapport à la courroie et afin d'exercer sur cette dernière la tension adéquate.

La poulie tournante de tels galets tendeurs est généralement montée à rotation sur le support par l'intermédiaire d'un palier à roulement. La poulie proprement dite est solidarisée à la bague extérieure tournante du roulement, tandis que le support fixe est rendu solidaire de la bague intérieure du roulement.

La poulie est souvent réalisée en matière synthétique surmoulée directement sur la bague extérieure du roulement. Le moulage de la matière synthétique se fait donc dans un moule à l'intérieur duquel on a préalablement introduit le palier à roulement. Afin d'obtenir une solidarisation efficace de la matière synthétique de la poulie ainsi sourmoulée sur la bague extérieure métallique du roulement, ladite bague extérieure peut être pourvue de reliefs ou de creux réalisés sur une partie de sa surface extérieure. La matière synthétique en fusion vient alors s'incruster lors du moulage dans ces aspérités et réalise une liaison intime entre les deux pièces lors du refroidissement. Un exemple d'un tel mode de réalisation est décrit dans le brevet US 4 848 938.

Une telle réalisation présente toutefois certains inconvénients.

C'est ainsi que les paliers à roulement doivent être transportés depuis leur lieu de fabrication jusqu'au lieu de surmoulage de la poulie en matière synthétique. Les poulies surmoulées sur les paliers à roulement doivent ensuite être retournées au fabricant de galets tendeurs, ce qui entraîne une manipulation et un transport coûteux ainsi que des risques supplémentaires d'endommagement et de pollution des paliers à roulement.

De plus, l'opération de surmoulage elle-même de la matière synthétique de la poulie sur la palier à roulement est une opération relativement longue et délicate à mettre en oeuvre. Elle nécessite en effet la mise en place précise des paliers à roulement dans le moule avant le surmoulage. Le rétreint de la matière synthétique durant son refroidissement crée en outre des modifications de jeu interne du palier à roulement qui sont difficiles à maîtriser.

L'invention se propose de résoudre l'ensemble de ces inconvénients.

Le galet tendeur de courroie selon l'invention, comporte un support fixe et une poulie tournante réalisée en une matière synthétique moulée, montée à rotation sur le support par l'intermédiaire d' un palier à roulement. La poulie présente une surface périphérique destinée à entrer en contact avec une courroie et un alésage solidarisé avec la bague extérieure métallique tournante du palier. La poulie, moulée séparément, est montée à force sur la bague extérieure du palier qui présente des moyens d'ancrage circonférentiel, venant s'incruster, au moins partiellement, dans la matière de la poulie. Ces moyens d'ancrage peuvent par exemple être réalisés sous la forme d'une surface moletée ou comportant une pluralité de stries.

Selon un mode de réalisation, l'alésage de la poulie comprend une surface d'ancrage adaptée pour coopérer avec les moyens d'ancrage de la bague extérieure du palier.

L'alésage de la poulie comprend de préférence une surface cylindrique de centrage coopérant avec une surface correspondante de la bague extérieure du palier. Dans ce cas, la surface d'ancrage est par exemple une surface cylindrique de diamètre réduit.

La poulie comporte en outre de préférence des moyens d'immobilisation axiale venus de moulage, coopérant avec la bague extérieure du palier. Ces moyens d'immobilisation axiale peuvent comprendre des pattes d'encliquetage coopérant avec l'une des faces frontales de la bague extérieure du palier et un moyen de butée coopérant avec l'autre face frontale de la bague extérieure du palier.

Généralement, la poulie est moulée en une seule pièce. Dans certaines applications cependant, il peut être avantageux que la poulie comprennne deux parties moulées séparément, assemblées l'une avec l'autre. La bague extérieure du palier présente alors deux ensembles de moyens d'ancrage coopérant chacun avec l'une des dites parties de poulie.

Pour simplifier la fabrication, les deux parties de poulie sont de préférence identiques et symétriques. Elles comprennent chacune des moyens d'assemblage réciproque et un moyen de butée coopérant avec une face frontale de la bague extérieure du palier.

L'invention a également pour objet une poulie réalisée en une matière synthétique moulée, en une ou deux parties, destinée à équiper un galet tendeur tel que décrit précédemment.

L'invention sera mieux comprise à l'étude de quelques modes de réalisation décrits à titre d'exemples nullement limitatifs et illustrés par les dessins annexés, sur lesquels :
- la figure 1 illustre en coupe axiale un premier mode de réalisation d'une poulie selon l'invention destinée à équiper un galet tendeur;
- la figure 2 est une coupe axiale d'un palier à roulement destiné à coopérer avec la poulie de la figure 1 pour la réalisation d'un galet tendeur selon l'invention;
- la figure 3 est une vue extérieure de côté partielle, agrandie, prise dans le sens de la flèche 3 de la figure 2 et montrant la structure des moyens d'ancrage circonférentiels de la bague extérieure du palier à roulement;
- la figure 4 est une vue en coupe axiale montrant la poulie de la figure 1 montée sur le palier de la figure 2;
- la figure 5 est une vue partielle en coupe selon V-V de la figure 4, montrant en vue agrandie les moyens d'ancrage de la bague extérieure du palier à roulement partiellement incrustés dans la matière de la poulie;
- la figure 6 est une demi-coupe axiale d'un troisième mode de réalisation d'un galet tendeur selon l'invention, montant une poulie en deux parties;
- la figure 7 est une vue partielle agrandie en coupe, montrant les moyens d'assemblage des deux parties de la poulie visible sur la figure 6.

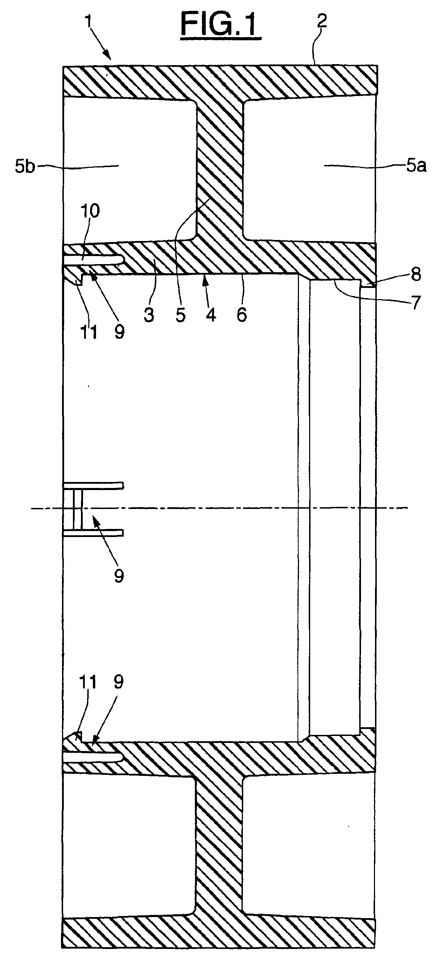

Telle qu'illustrée sur la figure 1, la poulie selon l'invention référencée 1 dans son ensemble, est réalisée par moulage d'une matière synthétique. La poulie 1 présente une surface périphérique 2 destinée à entrer en contact avec une courroie non illustrée sur les figures, ainsi qu'une portion cylindrique interne 3 présentant un alésage 4. La portion cylindrique interne 3 et la portion périphérique 2 sont reliées entre elles par une âme radiale 5 et, dans l'exemple illustré, par des nervures radiales de rigidification 5a, 5b.

L'alésage 4 comprend une surface cylindrique de centrage 6, et une surface d'ancrage 7 également cylindrique dans le mode de réalisation illustré sur la figure 1, mais présentant un diamètre inférieur à celui de la surface cylindrique de centrage 6. Au voisinage de l'une de ses faces frontales, du côté de la surface d'ancrage 7, l'alésage 4 comporte en outre un épaulement de butée 8 dont le diamètre est encore inférieur à celui de la surface d'ancrage 7. De l'autre côté, la portion cylindrique interne 3 présente des pattes d'encliquetage 9, par exemple au nombre de trois, présentant une fente 10 qui assure une certaine souplesse à la patte 9 dont l'extrémité comporte un bec 11 formant crochet.

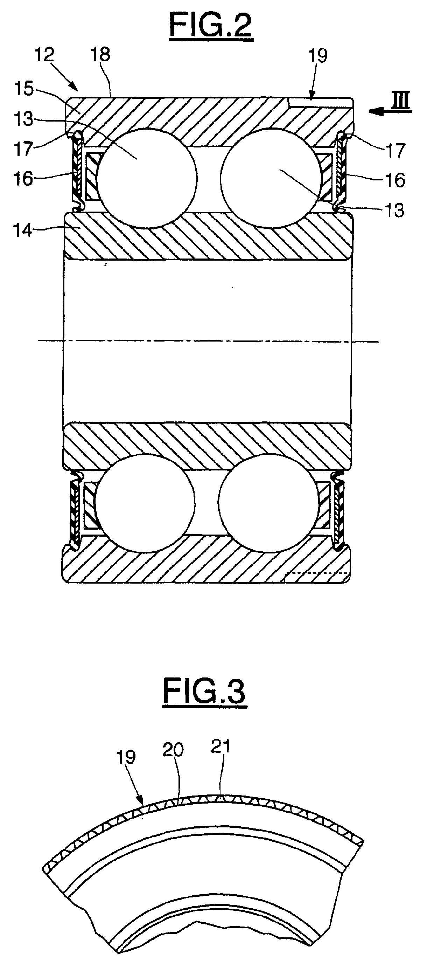

La poulie 1, une fois réalisée par moulage, peut être montée sur un palier à roulement tel que le palier à roulement référencé 12 dans son ensemble et illustré sur la figure 2.

A titre d'exemple, on a illustré ici un palier à roulement à deux rangées de billes 13, présentant une bague intérieure 14 destinée à coopérer avec un support fixe non illustré sur la figure et une bague extérieure tournante 15. Des dispositifs de protection et d'étanchéité 16 sont en outre prévus sous la forme de rondelles montées entre la bague intérieure 14 et la bague extérieure 15 grâce à l'existence de gorges en creux 17 pratiquées dans l'alésage de la bague extérieure 15.

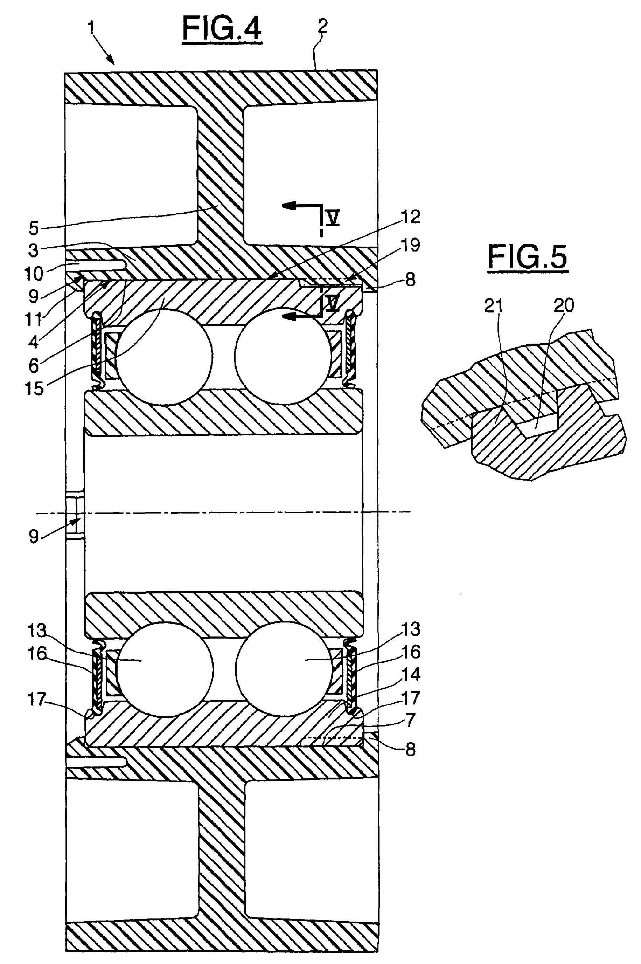

La bague extérieure 15 comprend une surface cylindrique 18 destinée à coopérer avec la surface cylindrique de centrage 4 de la poulie 1 et comportant donc sensiblement le même diamètre. Sur l'un des côtés de la bague extérieure 15, celle-ci présente des moyens d'ancrage circonférentiels 19 constitués ici sous la forme d'un moletage comportant une pluralité de stries ou cannelures en creux 20 et de reliefs 21 visibles sur les figures 3 et 5. Cette zone d'ancrage s'étend depuis la face frontale de la bague extérieure 15 jusqu'à une certaine distance en direction de l'autre face frontale de la bague extérieure 15. La dimension axiale de la zone d'ancrage 19 correspond sensiblement à la dimension axiale de la surface d'ancrage 7 de la poulie 1.

Lors du montage de la poulie 1, qui se fait à force, les pattes d'encliquetage 9 se déforment en passant au-dessus de la bague extérieure 15 et de la zone d'ancrage 19 du palier à roulement 12. L'alésage de la surface d'ancrage 7 étant inférieur au diamètre extérieur de la bague 15, le moletage d'ancrage 19 vient s'incruster partiellement dans la matière synthétique de la poulie 1 dans la zone de la surface d'ancrage 7. Le mouvement axial de montage est limité par l'épaulement de butée 8 qui vient en contact avec une face frontale du palier à roulement 12, tandis que les becs d'accrochage 11 viennent quant à eux coopérer avec l'autre face frontale (voir figure 4).

La poulie, qui a été moulée préalablement et sans que le palier à roulement soit introduit dans le moule, comme c'était le cas auparavant, peut donc être ainsi parfaitement solidarisée avec le palier à roulement, à la fois dans la direction circonférentielle et dans la direction axiale.

Sur la figure 4, où les pièces analogues portent les mêmes références, la poulie 1 est montée sur le palier 12, la zone correspondant à la surface d'ancrage 7 de la figure 1 étant partiellement incrustée dans le moletage 19.

Lors du montage de la poulie 1 préalablement moulée en matière synthétique, les reliefs 21 du moletage 19 viennent en effet coopérer en vue d'un ancrage en direction circonférentielle avec la matière synthétique en pénétrant partiellement dans celle-ci comme on le voit sur la figure 5.

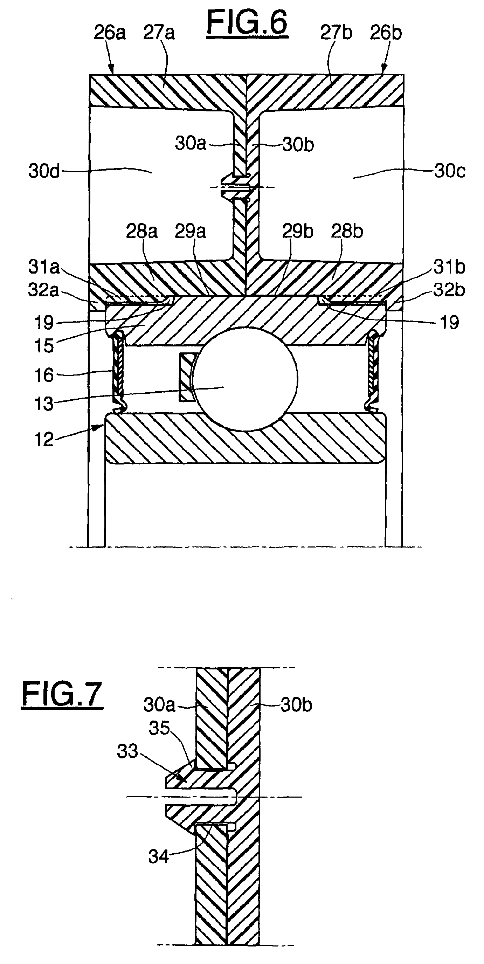

Dans le mode de réalisation de la figure 6, où les pièces similaires portent les mêmes références, la poulie est réalisée sous la forme de deux demi-poulies identiques 26a et 26b, assemblées l'une avec l'autre. Les deux demi-poulies 26a, 26b sont comme précédemment fabriquées séparément par moulage d'une matière synthétique avant d'être montées sur un palier à roulement 12 qui est ici un roulement à une seule rangée de billes.

La bague extérieure 15 du palier à roulement 12 présente, dans ce mode de réalisation, deux zones d'ancrage 19 identiques, pratiquées de chaque côté au voisinage de chacune des faces frontales de la bague extérieure 15. La structure de ces zones d'ancrage 19 peut être par exemple identique à celle de la zone d'ancrage 7 illustrée sur la figure 1.

Chacune des demi-poulies 26a, 26b présente une portion cylindrique extérieure 27a, 27b et une portion cylindrique intérieure 28a, 28b présentant une portion de surface cylindrique de centrage 29a, 29b coopérant avec la surface cylindrique de la bague extérieure 15 dans la zone centrale de celle-ci. Une portion d'âme radiale 30a, 30b relie les portions cylindriques respectives 27a, 28a et 27b, 28b.

Chacune des portions cylindriques internes 28a, 28b présente des moyens d'ancrage 31a, 31b qui sont par exemple identiques à ceux illustrés sur les figures 1 à 3. Un épaulement externe 32a, 32b est prévu sur chacune des demi-poulies 26a, 26b d'une manière analogue à l'épaulement 8 des modes de réalisation précédents.

Les moyens d'assemblage des deux demi-poulies 26a, 26b peuvent être avantageusement constitués par une alternance de pions fendus 33 et de trous 34. Les pions fendus 33 comportent des becs d'accrochage 35 qui, après avoir pénétré dans les trous correspondants 34, viennent maintenir les deux demi-poulies 26a, 26b assemblées l'une à l'autre avec leurs portions d'âme 30a et 30b en contact radial. Des nervures de rigidification 30c et 30d sont également prévues. Les pions 33 et les trous 34 sont pratiqués dans les âmes 30a, 30b, alternativement. De cette manière, les deux demi-poulies 26a et 26a sont avantageusement identiques et symétriques de façon que leur fabrication puisse se faire à l'aide du même moule.

Les galets tendeurs réalisés en utilisant les poulies conformes à la présente invention, permettent d'éviter les multiples manipulations et les transports onéreux des pièces constitutives des galets tendeurs de type classique. La poulie par elle-même peut être réalisée par moulage par injection à haute cadence, puisqu'il n'est plus nécessaire de placer les paliers à roulement dans le moule.

Le montage de la poulie sur le palier à roulement peut s'automatiser facilement puisqu'il ne nécessite qu'un simple emmanchement à la presse.

Les paliers à roulement ne subissent pratiquement plus de transport et de manipulation, ce qui simplifie considérablement les problèmes de gestion de pièces, de logistique et évite tout risque de perte.

En outre, les risques de pollution ou d'endommagement des paliers à roulement se trouvent considérablement limités.

## Revendications

1. Galet tendeur de courroie comportant un support fixe et une poulie tournante (1) réalisée en une matière synthétique moulée, montée à rotation sur le support par l'intermédiaire d'un palier à roulement (12), la poulie présentant une surface périphérique (2) destinée à entrer en contact avec une courroie et un alésage (4) solidarisé avec la bague extérieure (15) métallique tournante du palier, **caractérisé par le fait que** la poulie, moulée séparément, est montée à force sur la bague extérieure du palier qui présente des moyens d'ancrage circonférentiel (19), venant s'incruster, au moins partiellement, dans la matière de la poulie.

2. Galet tendeur selon la revendication 1, **caractérisé par le fait que** l'alésage (4) de la poulie comprend une surface d'ancrage (7) adaptée pour coopérer avec les moyens d'ancrage (19) de la bague extérieure du palier.

3. Galet tendeur selon les revendications 1 ou 2, **caractérisé par le fait que** l'alésage (4) de la poulie comprend une surface cylindrique de centrage (6) coopérant avec une surface (18) correspondante de la bague extérieure du palier.

4. Galet tendeur selon la revendication 3, **caractérisé par le fait que** la surface d'ancrage (7) est une surface cylindrique de diamètre réduit.

5. Galet tendeur selon l'une quelconque des revendications précédentes, **caractérisé par le fait que** la poulie comporte des moyens d'immobilisation axiale venus de moulage, coopérant avec la bague extérieure du palier.

6. Galet tendeur selon la revendication 5, **caractérisé par le fait que** les moyens d'immobilisation axiale comprennent des pattes d'encliquetage (9) coopérant avec l'une des faces frontales de la bague extérieure du palier et un moyen de butée (8) coopérant avec l'autre face frontale de la bague extérieure du palier.

7. Galet tendeur selon l'une quelconque des revendications 1 à 5, **caractérisé par le fait que** la poulie comprend deux parties (26a, 26b) moulées séparément, assemblées l'une avec l'autre, la bague extérieure du palier présentant deux ensembles de moyens d'ancrage coopérant chacun avec l'une desdites parties de poulie.

8. Galet tendeur selon la revendication 7, **caractérisé par le fait que** les deux parties de poulie (26a, 26b) sont identiques et comprennent chacune des moyens d'assemblage réciproque (33, 34) et un moyen de butée (32a, 32b) coopérant avec une face frontale de la bague extérieure du palier.

9. Poulie réalisée en une matière synthétique moulée, en une ou deux parties, destinée à équiper un galet tendeur selon l'une quelconque des revendications précédentes.

## Claims

1. Belt tensioning roller comprising a fixed support and a rotating pulley (1) made of a moulded synthetic material, mounted so as to rotate on the support via a rolling bearing (12), the pulley having a peripheral surface (2) designed to come into contact with a belt and a bore (4) integral with the outer rotating metal race (15) of the bearing, **characterized in that** the pulley, moulded separately, is force-fitted onto the outer race of the bearing that has circumferential anchoring means (19), being inlaid, at least partially, in the material of the pulley.

2. Tensioning roller according to Claim 1, **characterized in that** the bore (4) of the pulley comprises an anchoring surface (7) suitable for interacting with the anchoring means (19) of the outer race of the bearing.

3. Tensioning roller according to Claims 1 or 2, **characterized in that** the bore (4) of the pulley comprises a cylindrical centring surface (6) interacting with a matching surface (18) of the outer race of the bearing.

4. Tensioning roller according to Claim 3, **characterized in that** the anchoring surface (7) is a cylindrical surface of reduced diameter.

5. Tensioning roller according to any one of the preceding claims, **characterized in that** the pulley comprises axial immobilization means, made in the same moulding, interacting with the outer race of the bearing.

6. Tensioning roller according to Claim 5, **characterized in that** the axial immobilization means comprise snap-fitting lugs (9) interacting with one of the transverse faces of the outer race of the bearing and an abutment means (8) interacting with the other transverse face of the outer race of the bearing.

7. Tensioning roller according to any one of Claims 1 to 5, **characterized in that** the pulley comprises two separately moulded portions (26a, 26b), assembled together, the outer race of the bearing having two assemblies of anchoring means each interacting with one of the said pulley portions.

8. Tensioning roller according to Claim 7, **characterized in that** the two pulley portions (26a, 26b) are identical and each comprise reciprocal assembly means (33, 34) and an abutment means (32a, 32b) interacting with a transverse face of the outer race of the bearing.

9. Pulley made of a moulded synthetic material, in one or two portions, designed to be fitted to a tensioning roller according to any one of the preceding claims.

## Patentansprüche

1. Riemenspannrolle mit einem feststehenden Träger und einer aus einem gespritzten Kunststoff hergestellten umlaufenden Riemenscheibe (1), die mittels eines Wälzlagers (12) auf dem Träger drehbar angebracht ist, wobei die Riemenscheibe eine Umfangsfläche (2), die dazu vorgesehen ist, mit einem Riemen in Berührung zu kommen, und einen zylindrischen Innenraum (4) aufweist, der an dem aus Metall gefertigten umlaufenden Lageraußenring (15) starr befestigt ist, **dadurch gekennzeichnet, dass** die gesondert gespritzte Riemenscheibe mit Kraft auf dem Lageraußenring angebracht ist, der in Umfangsrichtung wirkende Verankerungsmittel (19) aufweist, die zumindest teilweise, in den Werkstoff der Riemenscheibe eingreifen.

2. Riemenspannvorrichtung nach Anspruch 1, **dadurch gekennzeichnet, dass** der zylindrische Innenraum (4) der Riemenscheibe eine Verankerungsfläche (7) aufweist, die dazu eingerichtet ist, mit dem Verankerungsmittel (19) des Lageraußenrings zusammenzuwirken.

3. Riemenspannvorrichtung gemäß den Ansprüchen 1 oder 2, **dadurch gekennzeichnet, dass** der zylindrische Innenraum (4) der Riemenscheibe eine zylindrische Zentrierungsfläche (6) aufweist, die mit einer dem Lageraußenring entsprechenden Fläche (18) zusammenwirkt.

4. Riemenspannvorrichtung nach Anspruch 3, **dadurch gekennzeichnet, dass** die Verankerungsfläche (7) eine zylindrische Fläche von reduziertem Durchmesser ist.

5. Riemenspannvorrichtung nach einem der vorhergehenden Ansprüche, **dadurch gekennzeichnet, dass** die Riemenscheibe durch Spritzen hergestellte axiale Befestigungsmittel aufweist, die mit dem Lageraußenring zusammenwirken.

6. Riemenspannvorrichtung nach Anspruch 5, **dadurch gekennzeichnet, dass** die axialen Befestigungsmittel Einrastkrallen (9), die mit einer der Stirnseiten des Lageraußenrings zusammenwirken, und ein Anschlagmittel (8) beinhalten, das mit der anderen Stirnseite des Lageraußenrings zusammenwirkt.

7. Riemenspannvorrichtung nach einem der Ansprüche 1 bis 5, **dadurch gekennzeichnet, dass** die Riemenscheibe auf zwei gesondert gespritzten miteinander zusammengesetzten Teilen (26a, 26b) basiert, wobei der Lageraußenring zwei Verankerungsmitteleinheiten aufweist, die mit jeweils einem der Teile der Riemenscheibe zusammenwirken.

8. Riemenspannvorrichtung nach Anspruch 7, **dadurch gekennzeichnet, dass** die beiden Riemenscheibenteile (26a, 26b) miteinander identisch sind und jeweils gegenseitige Befestigungsmittel (33, 34) und ein Anschlagmittel (32a, 32b) aufweisen, das mit einer Stirnseite des Lageraußenrings zusammenwirkt.

9. In einem oder zwei Teilen aus einem gespritzten Kunststoff hergestellte Riemenscheibe, die dazu bestimmt ist, eine Spannrolle nach einem der vorhergehenden Ansprüche zu bestücken.
